# EUROPÄISCHE PATENTANMELDUNG

(11) **EP 2 952 117 A1**
(43) Veröffentlichungstag der Anmeldung: **09.12.2015**
(21) Anmeldenummer: 15170055.6
(22) Anmeldetag: 01.06.2015
(51) Int. Cl.: A46B 13/06, A46B 11/06, F24J 2/46, A46B 13/00, B08B 1/00, B08B 1/04

(54) **VORRICHTUNG ZUM REINIGEN VON OBERFLÄCHEN**

(30) Priorität: 02.06.2014 DE 102014107733
(71) Anmelder: Jäger, Anton, 89250 Senden (DE)
(72) Erfinder: Jäger, Anton, 89250 Senden (DE)
(74) Vertreter: Manitz, Finsterwald & Partner GbR

(57) **Zusammenfassung**

Die Erfindung betrifft eine Vorrichtung zum Reinigen von Oberflächen, insbesondere von Solar- und/oder Photovoltaikanlagen, mit zumindest einem während des Reinigungsbetriebs sich bewegenden, insbesondere rotierenden, Reinigungsorgan, insbesondere einer Bürstenwalze oder Tellerbürste, mit einer Halteeinrichtung für das Reinigungsorgan, mit einem in unterschiedlichen Zuständen betreibbaren Fluidantrieb für das Reinigungsorgan, und mit einer Schalteinrichtung, mit der zwischen den unterschiedlichen Betriebszuständen des Fluidantriebs gewechselt werden kann.

## Beschreibung

Die Erfindung betrifft eine Vorrichtung zum Reinigen von Oberflächen, insbesondere von Solar- und/oder Photovoltaikanlagen, mit zumindest einem während des Reinigungsbetriebs sich bewegenden, insbesondere rotierenden, Reinigungsorgan, insbesondere einer Bürstenwalze oder Tellerbürste, eine Halteeinrichtung für das Reinigungsorgan sowie einem Fluidantrieb für das Reinigungsorgan.

Derartige Vorrichtungen sind grundsätzlich bekannt, beispielsweise aus der DE 10 2010 018 011 A1 oder der DE 10 2011 103 537 A1. Dementsprechend kann der Fluidantrieb für eine derartige Reinigungsvorrichtung ein oder mehrere Turbinenräder oder Schaufelräder umfassen, die mit einem zugeführten Fluid, insbesondere Wasser, beaufschlagt werden, um auf diese Weise die Strömungsenergie des unter Druck zugeführten Fluids in die Reinigungsbewegung des Reinigungsorgans umzusetzen, das direkt oder indirekt mit dem oder einem der Turbinen- bzw. Schaufelräder gekoppelt ist.

Es besteht das Bedürfnis, die Einsatzmöglichkeiten solcher Vorrichtungen zu erweitern.

Die Lösung dieser Aufgabe erfolgt erfindungsgemäß dadurch, dass der Fluidantrieb derart ausgebildet ist, dass er in unterschiedlichen Zuständen betreibbar ist, wobei eine Schalteinrichtung vorgesehen ist, mit der zwischen den unterschiedlichen Betriebszuständen des Fluidantriebs gewechselt werden kann.

Insbesondere bei der Reinigung von beispielsweise auf geneigten Dächern angebrachten Solar- und/oder Photovoltaikanlagen treten in der Praxis immer wieder Situationen auf, in denen es für den Benutzer vorteilhaft ist, wenn er die Reinigungsbewegung des Reinigungsorgans verändern kann, um beispielsweise eine um ihre Mittelachse rotierende zylindrische Bürstenwalze - vom Benutzer aus gesehen - entweder vorwärts oder rückwärts rotieren zu lassen. Beispielsweise Übergänge zwischen den Panels einer Solar- bzw. Photovoltaikanlage können durch vorübergehendes Umkehren der Drehrichtung einer während des Betriebs rotierenden Reinigungsbürste effektiv und zumindest im Wesentlichen vollständig von Verschmutzungen befreit werden. Des Weiteren kann es in der Praxis erforderlich sein, die Reinigungsbewegung vorübergehend zu unterbrechen, beispielsweise eine rotierende Bürstenwalze kurzzeitig anzuhalten, um anschließend den Reinigungsbetrieb wieder aufzunehmen.

Die erfindungsgemäße Reinigungsvorrichtung erlaubt es aufgrund ihrer Schalteinrichtung dem Benutzer, derartigen in der Praxis auftretenden Situationen auf einfache Weise zu begegnen. Beispielsweise eine rotierende Bürstenwalze kann vom Benutzer einfach durch Betätigen der Schalteinrichtung vorübergehend angehalten oder mit umgekehrtem Drehsinn betrieben werden. Die Einsatzmöglichkeiten von Reinigungsvorrichtungen der hier in Rede stehenden Art werden somit durch die Erfindung in vorteilhafter Weise erweitert.

Weiterbildungen der Erfindung sind in der nachfolgenden Beschreibung sowie den abhängigen Ansprüchen und der beigefügten Zeichnung angegeben.

Wie vorstehend bereits angedeutet, können sich zwei Betriebszustände des Fluidantriebs hinsichtlich der Bewegungsrichtung des Reinigungsorgans voneinander unterscheiden, insbesondere hinsichtlich des Drehsinns des Reinigungsorgans.

Des Weiteren kann der Fluidantrieb in zumindest einem der Betriebszustände aktiv und in einem anderen der Betriebszustände unterbrochen sein.

Gemäß einer weiteren Ausführungsform ist die Schalteinrichtung im Strömungsweg des Fluids zwischen einer Fluidzuführung und dem Reinigungsorgan angeordnet. Dieses Konzept der Anordnung der Schalteinrichtung schafft eine Vielzahl von besonders vorteilhaften Möglichkeiten, den Betriebszustand des Fluidantriebs zu wechseln. Insbesondere wird zumindest ein Teil der Schalteinrichtung von dem Fluid durchströmt.

Des Weiteren kann vorgesehen sein, dass die Schalteinrichtung in unterschiedliche Schaltkonfigurationen bringbar ist, wobei zwischen den Schaltkonfigurationen der Schalteinrichtung und den Betriebszuständen des Fluidantriebs eine Zuordnung besteht. Wenn beispielsweise die Schalteinrichtung eine Mehrzahl von umschaltbaren Ventilen besitzt, dann können unterschiedliche Relativstellungen der Ventile untereinander jeweils eine Schaltkonfiguration bilden, der ein Betriebszustand des Fluidantriebs entspricht.

Vor diesem Hintergrund kann vorgesehen sein, dass die Schaltkonfigurationen der Schalteinrichtung durch Stellungen eines oder mehrerer Schaltorgane, insbesondere Ventile, definiert sind.

Besonders vorteilhaft ist das erfindungsgemäße Konzept einer Schalteinrichtung, wenn der Fluidantrieb eine oder mehrere Antriebseinheiten umfasst und zu jeder Antriebseinheit wenigstens ein Fluidweg führt, wobei mittels der Schalteinrichtung jeder Fluidweg entweder freigebbar oder verschließbar ist.

In einer ersten Variante dieses Konzepts umfasst der Fluidantrieb zumindest eine Antriebseinheit, zu der wenigstens zwei Fluidwege führen, wobei in einem ersten Betriebszustand ein erster Fluidweg freigegeben und ein zweiter Fluidweg verschlossen und in einem zweiten Betriebszustand der erste Fluidweg verschlossen und der zweite Fluidweg freigegeben ist. Bei dieser Variante kann beispielsweise ein einziges Turbinen- oder Schaufelrad für eine zylindrische Bürstenwalze vorgesehen sein, das mittels der beiden Fluidwege auf unterschiedliche Art und Weise beaufschlagt wird, und zwar derart, dass unterschiedliche Drehrichtungen des Rades vorliegen.

In einer zweiten Variante kann der Fluidantrieb zumindest zwei Antriebseinheiten umfassen, zu denen jeweils wenigstens ein Fluidweg führt, wobei in einem ersten Betriebszustand der Fluidweg zu einer ersten Antriebseinheit freigegeben und der Fluidweg zu einer zweiten Antriebseinheit verschlossen und in einem zweiten Betriebszustand der Fluidweg zur ersten Antriebseinheit verschlossen und der Fluidweg zur zweiten Antriebseinheit freigegeben ist.

Während bei der ersten Variante eine einzige Antriebseinheit mehrere Betriebszustände, beispielsweise unterschiedliche Drehrichtungen, realisieren kann, kann bei dieser zweiten Variante gewissermaßen eine Aufteilung der Betriebszustände auf zwei oder mehr Antriebseinheiten erfolgen, die dann wahlweise durch entsprechendes Freigeben oder Verschließen der Fluidwege jeweils beaufschlagt bzw. nicht beaufschlagt werden. Diese zweite Variante kann beispielsweise so realisiert werden, dass an jeder der beiden Stirnseiten einer zylindrischen Bürstenwalze jeweils eine Antriebseinheit angeordnet ist, wobei aber während des Reinigungsbetriebs jeweils nur eine der beiden Antriebseinheiten aktiv ist und die Bürstenwalze antreibt, während die jeweils andere Antriebseinheit deaktiviert bzw. unterbrochen ist und insbesondere allenfalls dazu dient, die Bürstenwalze stirnseitig zu halten.

Wie vorstehend bereits angedeutet, kann erfindungsgemäß die Schalteinrichtung eine Ventilanordnung umfassen.

Dabei kann vorgesehen sein, dass die Schalteinrichtung wenigstens ein Ventil umfasst, das zumindest einem Fluidweg zugeordnet und zwischen einer Freigabestellung und einer Schließstellung verstellbar ist.

Des Weiteren ist erfindungsgemäß vorgesehen, dass für die Schalteinrichtung eine Betätigungseinrichtung vorgesehen ist, mittels welcher die Schalteinrichtung in unterschiedliche Schaltkonfigurationen bringbar ist.

In einem bevorzugten Ausführungsbeispiel ist die Betätigungseinrichtung ausschließlich mechanisch betreibbar. Hierzu ist keine Fremdenergie nötig, so dass sich eine entsprechende Reinigungsvorrichtung besonders kostengünstig herstellen lässt und mit wenig Aufwand eingerichtet und betrieben werden kann.

Gleichwohl ist es erfindungsgemäß möglich, eine elektrische oder elektromechanische Schalteinrichtung vorzusehen, die mit einer eigenen Energiequelle wie beispielsweise einem aufladbaren Akku versehen und durch eine drahtlose Fernsteuerung vom Benutzer angesteuert werden kann.

In einem weiteren Ausführungsbeispiel ist vorgesehen, dass mittels der Betätigungseinrichtung zumindest eine die Schaltkonfiguration ändernde Stellbewegung eines Stellorgans bewirkbar ist.

Mittels des Stellorgans kann eine Ventilanordnung der Schalteinrichtung beaufschlagbar sein. Dabei kann insbesondere vorgesehen sein, dass mittels einer Stellbewegung des Stellorgans gleichzeitig mehrere Ventile der Ventilanordnung verstellbar sind.

Bei der Stellbewegung des Stellorgans kann es sich um eine Drehbewegung handeln. Dies ist aber nicht zwingend. Auch lineare Bewegungen eines Stellorgans, beispielsweise Hin- und Herbewegungen, können für das Stellorgan vorgesehen sein.

Die Stellbewegung des Stellorgans kann durch eine, insbesondere manuell erfolgende, Drehbewegung der Betätigungseinrichtung bewirkbar sein. So kann beispielsweise der Benutzer eine Haltestange für das Reinigungsorgan verdrehen, bei der es sich insbesondere um eine mehrteilige und/oder teleskopartig ausgebildete Haltestange handelt.

Alternativ oder zusätzlich kann eine Stellbewegung des Stellorgans durch eine, insbesondere manuell erfolgende, Zieh-, Schiebe- oder Drückbewegung bewirkbar sein. Eine solche Stellbewegung kann zumindest teilweise wenigstens näherungsweise parallel zur Halteeinrichtung verlaufen.

Die Betätigungsbewegung kann generell unabhängig von ihrer Art in eine andersartige und/oder in eine anders orientierte Stellbewegung des Stellorgans umsetzbar sein. So kann beispielsweise ein Zugseil, an welchem der Benutzer zum Ändern des Betriebszustandes des Fluidantriebs zieht, derart umgelenkt und mit dem Stellorgan gekoppelt sein, dass durch Ziehen am Zugseil das Stellorgan in eine Drehbewegung versetzt wird.

Gemäß einem weiteren Ausführungsbeispiel der Erfindung kann die Betätigungseinrichtung eine Impulssteuerung für die Schalteinrichtung umfassen. Dieses Konzept ermöglicht es, das unter Druck stehende zugeführte Fluid zum Umschalten zwischen den Betriebszuständen des Fluidantriebs zu nutzen.

Eine Impulssteuerung muss aber nicht zwingend das Fluid bzw. den Fluiddruck oder Änderungen des Fluiddrucks einsetzen. So kann beispielsweise auch eine gezielt vorgesehene Längenveränderbarkeit der Halteeinrichtung für eine Impulssteuerung vorgesehen sein, wobei der Benutzer insbesondere ruckartig eine Längenveränderung, insbesondere eine Verkürzung, herbeiführt und diese Veränderung in eine Stellbewegung umgesetzt wird. In eine Haltestange kann z.B. eine Federstrecke integriert sein oder ein Halteseil oder Halteschlauch kann mit einer elastisch verformbaren, insbesondere federunterstützten Ausbauchung versehen sein. Hierbei kann insbesondere die träge Masse der Halteeinrichtung und/oder des von der Halteeinrichtung insbesondere gegen die Wirkung der Schwerkraft gehaltenen Reinigungsorgans genutzt werden, um die Längenveränderung gegen die Rückstellkraft der Federstrecke herbeizuführen, die anschließend selbsttätig für die Wiederherstellung des Ausgangszustandes sorgt.

Die Impulssteuerung kann einen nach Art einer Ratsche oder Knarre wirksamen Betätigungsmechanismus umfassen, mit welchem eine Hin- und Herbewegung eines Betätigungsorgans in eine Stellbewegung eines Stellorgans umsetzbar ist.

Für die Impulssteuerung kann die Fluidzufuhr zeitlich veränderbar sein. Diese zeitliche Veränderung der Fluidzufuhr kann insbesondere durch Unterbrechen und Freigeben der Fluidzufuhr realisiert werden.

Eine bevorzugte Ausgestaltung sieht vor, dass die Impulssteuerung dazu ausgebildet ist, eine Stellbewegung eines Stellorgans bei einem Fluiddruck zu bewirken, der geringer ist als der Betriebsfluiddruck, insbesondere bei unterbrochener Fluidzufuhr, d.h. im drucklosen Zustand. Hierdurch ist sichergestellt, dass ein Schaltvorgang nicht bei einem zu hohen Fluiddruck erfolgen muss. Insbesondere kann der Schaltvorgang bei zumindest im Wesentlichen druckloser Schalteinrichtung erfolgen, so dass nur relativ geringe Schaltkräfte erforderlich sind.

Die Impulssteuerung kann ein bei freigegebener Fluidzufuhr durch das zugeführte Fluid gegen eine Rückstellkraft in einer ersten Stellung gehaltenes Betätigungsorgan umfassen, das durch Unterbrechen der Fluidzufuhr durch die Rückstellkraft in eine zweite Stellung bewegbar ist, wobei die Bewegung von der ersten Stellung in die zweite Stellung in eine Stellbewegung eines Stellorgans umsetzbar ist.

Bei diesem Konzept wird das unter Druck stehende Fluid dazu benutzt, durch das Arbeiten gegen die Rückstellkraft Energie zu speichern, die dann bei Reduzierung bzw. Wegnahme des Fluiddrucks das Betätigungsorgan selbsttätig zurückstellt und dadurch den Schaltvorgang im druckreduzierten oder drucklosen Zustand bewirkt.

Das Stellorgan der Schalteinrichtung kann eine Mehrzahl von Schaltbereichen umfassen, die jeweils bei Ausrichtung mit einem zu einer Antriebseinheit des Fluidantriebs führenden Fluidweg diesen entweder freigeben oder verschließen. Zumindest an einem der mit der Fluidzufuhr kommunizierenden Schaltbereiche kann ein bewegliches Schließelement vorgesehen sein, das durch das Fluid in eine Schließstellung bewegbar ist und in dieser gehalten wird.

Ein derartiges Stellorgan kann beispielsweise drehbar gelagert und mittels einer Impulssteuerung schrittweise bewegt werden. Bei einer derartigen Drehschaltung können die Schaltbereiche nacheinander mit dem oder den Fluidwegen derart gekoppelt werden, dass in Abhängigkeit von der Drehstellung des Stellorgans ein jeweiliger Fluidweg entweder freigegeben oder verschlossen ist. Ein Schließelement des Stellorgans kann zusammen mit einem Ventilsitz bei der entsprechenden Drehstellung des Stellorgans ein Ventil bilden, das stets verschlossen ist, wenn der Fluiddruck am Schaltbereich ansteht. Der betreffende Fluidweg wird freigegeben, wenn im Anschluss an einen Schaltvorgang ein nicht mit einem Schließelement versehener Schaltbereich in Ausrichtung mit dem betreffenden Fluidweg gebracht wird. Als Schließelement kann eine Kugel vorgesehen sein, die zusammen mit dem Ventilsitz ein durch den Fluiddruck verschließbares Kugelventil bildet. Alternativ können z.B. Schiebeventile vorgesehen sein. Grundsätzlich kann ein beweglicher Teil des Ventils jeweils am Schaltbereich vorgesehen und ein Ventilsitz dem Fluidweg zugeordnet und z.B. an einem Gehäuse ausgebildet sein, wobei aber prinzipiell auch die umgekehrte Anordnung möglich ist, d.h. der Schaltbereich den Ventilsitz bildet.

Gemäß einer Ausführungsform der Erfindung kann die Halteeinrichtung zumindest eine mehrteilige und/oder teleskopartig ausgebildete Haltestange umfassen. In einer alternativen Ausgestaltung kann die Halteeinrichtung wenigstens ein flexibles und/oder biegsames, bevorzugt als Fluidleitung ausgebildetes, Halteorgan umfassen, z.B. einen gleichzeitig als Fluidzufuhrleitung dienenden Schlauch oder ein Seil.

Mit einer Haltestange versehene Reinigungseinrichtungen können beispielsweise von einem Benutzer vom Boden aus gehalten und auf der zu reinigenden Fläche bewegt werden. Die Reinigungsorgane können aber auch beispielsweise von einer jeweils zu reinigenden geneigten Fläche herabgelassen und hinaufgezogen und dabei von Seilen oder Schläuchen gehalten werden.

Wie eingangs bereits erwähnt, kann der Fluidantrieb als Turbinen- oder Schaufelantrieb ausgebildet sein.

Der Fluidantrieb kann wenigstens ein durch Beaufschlagen mittels eines zugeführten Fluids in Rotation versetzbares Turbinen- oder Schaufelrad umfassen, dessen Rotation direkt oder indirekt, insbesondere über ein Getriebe, in eine Bewegung, insbesondere eine Rotation, des Reinigungsorgans umsetzbar ist.

Das Turbinen- oder Schaufelrad kann eine Rotationsachse aufweisen, die parallel versetzt zu einer Rotationsachse des Reinigungsorgans verläuft oder mit dieser zusammenfällt.

Wie vorstehend im Hinblick auf den grundsätzlich möglichen Aufbau einer erfindungsgemäßen Reinigungsvorrichtung angedeutet, kann in einer Variante eine Antriebseinheit des Fluidantriebs, insbesondere mittig, zwischen zumindest zwei gemeinsam mittels der Antriebseinheit bewegbaren Reinigungsorganen angeordnet sein, wobei insbesondere Rotationsachsen der Reinigungsorgane zusammenfallen oder parallel versetzt zueinander verlaufen. Ein derartiger Grundaufbau der Reinigungsvorrichtung ist beispielsweise aus der eingangs bereits erwähnten DE 10 2011 103 537 A1 bekannt.

Bei einem alternativen Grundaufbau kann zumindest eine Antriebseinheit des Fluidantriebs stirnseitig an einem, insbesondere als Bürstenwalze ausgebildeten, Reinigungsorgan angeordnet sein, wobei insbesondere vorgesehen ist, dass die Antriebseinheit das Reinigungsorgan stirnseitig hält. Ein derartiger Grundaufbau ist für sich genommen beispielsweise aus der ebenfalls bereits vorstehend genannten DE 10 2010 018 011 A1 bekannt.

Generell kann erfindungsgemäß vorgesehen sein, dass dem Reinigungsorgan mehrere, insbesondere genau zwei, Antriebseinheiten des Fluidantriebs zugeordnet sind.

Dabei kann das Reinigungsorgan entweder für jeden von mehreren unterschiedlichen Betriebszuständen von wenigstens zwei Antriebseinheiten gemeinsam oder in unterschiedlichen Betriebszuständen von unterschiedlichen Antriebseinheiten angetrieben werden.

Generell können erfindungsgemäß die mehreren Antriebseinheiten an unterschiedlichen Stellen des Reinigungsorgans wirksam sein.

In einer bevorzugten Ausgestaltung umfasst das Reinigungsorgan eine Bürstenwalze, wobei an jeder Stirnseite der Bürstenwalze wenigstens eine, insbesondere die Bürstenwalze stirnseitig haltende, Antriebseinheit angeordnet ist. Dieses Konzept ist aus der vorstehend erwähnten DE 10 2010 018 011 A1 für sich genommen bekannt.

Die Erfindung wird im Folgenden beispielhaft unter Bezugnahme auf die Zeichnung beschrieben; es zeigen:
- Fig. 1: eine Reinigungsvorrichtung nach dem Stand der Technik,
- Fig. 2a und 2b: eine weitere Reinigungsvorrichtung nach dem Stand der Technik,
- Fig. 3: schematisch eine erfindungsgemäße Reinigungsvorrichtung,
- Fig. 4: einen vergrößerten Ausschnitt von Fig. 3,
- Fig. 5: schematisch eine weitere Ausführungsform einer erfindungsgemäßen Reinigungsvorrichtung,
- Fig. 6: einen vergrößerten Ausschnitt von Fig. 5,
- Fig. 7: schematisch eine weitere Ausführungsform einer erfindungsgemäßen Reinigungsvorrichtung,
- Fig. 8: schematisch die Reinigungsvorrichtung von Fig. 3 an einem zu reinigenden Gegenstand,
- Fig. 9: drei schematische Darstellungen zur Erläuterung unterschiedlicher Fluidantriebskonzepte gemäß der Erfindung,
- Fig. 10: schematisch mit unterschiedlichem Drehsinn betriebene Bürstenwalzen an einem zu reinigenden Gegenstand, und
- Fig. 11: schematisch eine erfindungsgemäße Ausführungsform einer Reinigungsvorrichtung mit Impulssteuerung für die Schalteinrichtung.

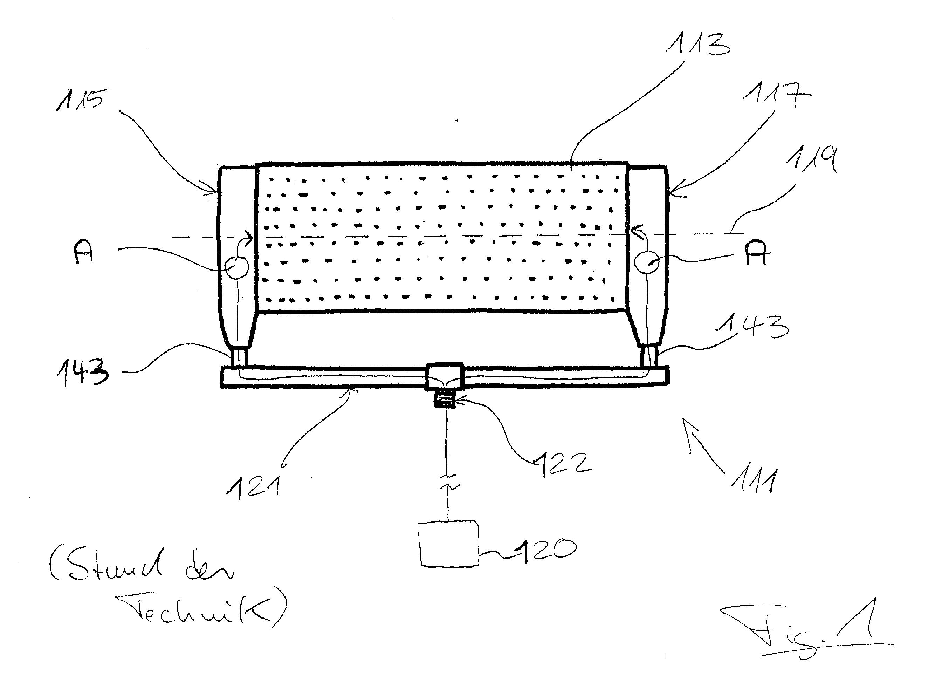

Fig. 1 zeigt eine Reinigungsvorrichtung, wie sie in der eingangs bereits genannten DE 10 2010 018 011 A1 beschrieben ist und die einen Grundaufbau aufweist, der nachstehend erläutert wird und der auch für erfindungsgemäße Reinigungsvorrichtungen vorgesehen sein kann.

Die in Fig. 1 dargestellte Reinigungsvorrichtung umfasst eine zylindrische Reinigungswalze, die an ihrer Umfangsfläche mit einer auf den jeweiligen Reinigungszweck zugeschnittenen Ausstattung versehen ist, beispielsweise mit einer Beborstung. Zusätzlich können im beispielsweise die Beborstung tragenden Walzenmantel Austrittsöffnungen für ein Reinigungsfluid, insbesondere Wasser, vorgesehen sein.

Halterung und Drehantrieb der Reinigungswalze 113 erfolgen hier durch zwei Antriebseinheiten 115, 117. Die Antriebseinheiten dienen gleichzeitig als Fluidzufuhr für die Walze 113 und sind hierzu über Anschlüsse 143 an eine gemeinsame Halterung 121 angeschlossen, die sich parallel zur Drehachse 119 der Reinigungswalze 113 erstreckt. Zusammen mit der Halterung 121 bilden die beiden Antriebseinheiten 115, 117 einen Träger 111 für die Reinigungswalze 113.

Die Halterung 121 ist über einen Anschluss 122 insbesondere an einen handelsüblichen Hochdruckreiniger 120 anschließbar, so dass die Reinigungsvorrichtung auch für Privathaushalte interessant ist.

Der Strömungsweg des Reinigungsfluids durch die Halterung 121 und die Antriebseinheiten 115, 117 in das Innere der Reinigungswalze 113 hinein ist durch die Pfeile in Fig. 1 angedeutet. Mit "A" ist in den Antriebseinheiten 115, 117 jeweils angedeutet, dass das Reinigungsfluid dort insofern Arbeit verrichtet, als ihm in einer hier nicht näher erläuterten Turbine kinetische Energie entzogen wird, um hierdurch einen Drehantrieb der Reinigungswalze 113 zu realisieren.

Insofern erfüllen die Antriebseinheiten 115, 117 jeweils eine Dreifachfunktion, indem sie die Reinigungswalze 113 halten und drehbar lagern, für die Zufuhr des Fluids in das Innere der Reinigungswalze 113 sorgen und außerdem den Drehantrieb für die Reinigungswalze 113 realisieren.

Halterung und Drehlagerung der Reinigungswalze 113 können ausschließlich durch die gewissermaßen die "Zinken" eines insgesamt gabelartigen Trägers 111 bildenden Antriebseinheiten 115, 117 besorgt werden. Die Halterungs- und/oder Lagerungsfunktion für die Reinigungswalze 113 kann aber zumindest zum Teil auch auf andere Art und Weise realisiert werden, beispielsweise mittels die Reinigungswalze 113 durchsetzender Querverstrebungen, die für die nötige oder für zusätzliche Stabilität bzw. Festigkeit sorgen. Bei entsprechend stabiler Ausgestaltung des Querträgers 121 ist es aber möglich, die Reinigungswalze 113 ausschließlich mittels der beiden stirnseitig angreifenden Antriebseinheiten 115, 117 zu halten und bezüglich der Rotation um die Drehachse 119 zu lagern.

Der Durchmesser der Reinigungswalze 113 liegt beispielsweise bei etwa 200 mm, was sich insbesondere für die Reinigung von Solar- oder Photovoltaikanlageflächen als besonders geeignet herausgestellt hat. Mit dem geschilderten Aufbau der Reinigungsvorrichtung können problemlos unterschiedliche Arbeitsbreiten, d.h. Abmessungen der Reinigungswalze 113 entlang ihrer Längsachse 119, realisiert werden, die beispielsweise zwischen etwa 500 mm und 1.000 mm liegen. Hierdurch kann in vorteilhafter Weise eine Anpassung der Reinigungsvorrichtung an die üblichen Feldgrößen von Solar- bzw. Photovoltaikanlagen erfolgen. Des Weiteren kann beispielsweise bei ausreichender Länge der Halterung 121 eine in Längsrichtung der Halterung 121 vorgesehene Verstellbarkeit der beiden stirnseitig eingreifenden Antriebseinheiten 115, 117 vorgesehen sein, die dazu dient, mit ein und derselben Vorrichtung unterschiedlich lange Reinigungswalzen 113 aufnehmen zu können.

Hinsichtlich eines möglichen Aufbaus der Antriebseinheiten 115, 117 wird auf den weiteren Inhalt der DE 10 2010 018 011 A1 Bezug genommen.

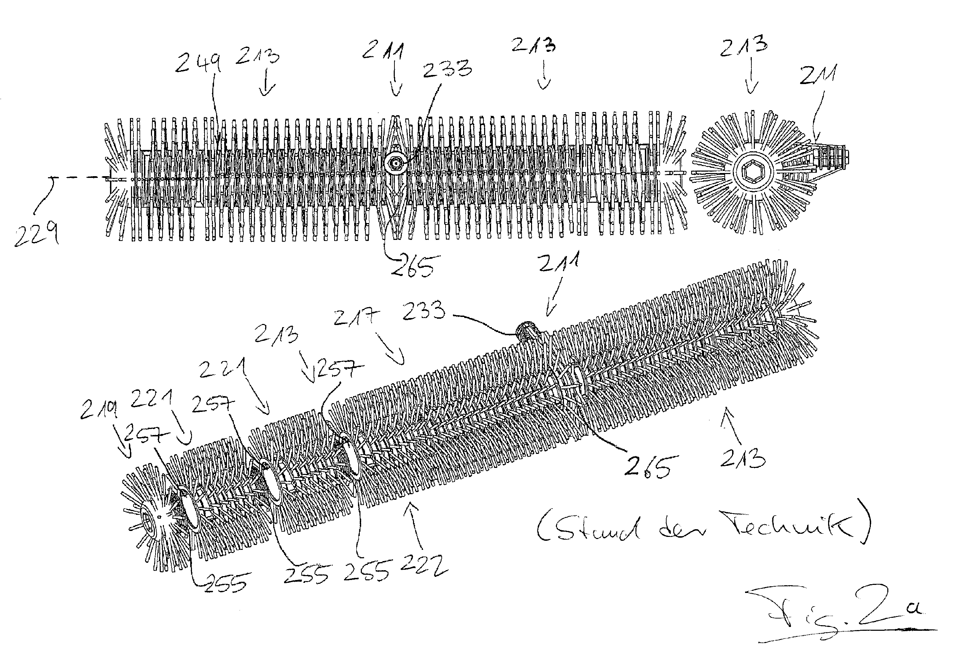

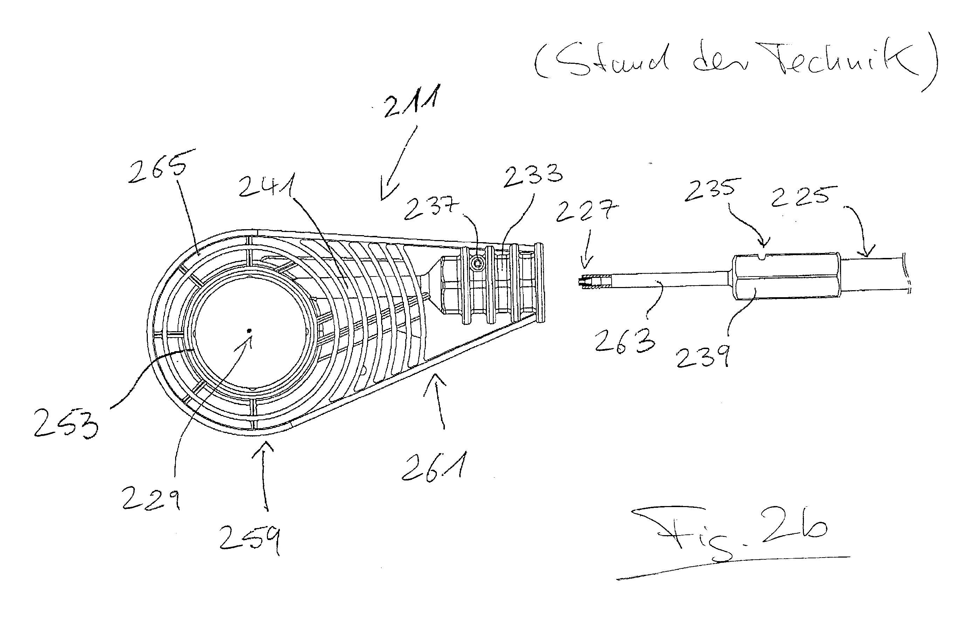

Eine weitere aus dem Stand der Technik, nämlich der bereits erwähnten DE 10 2011 103 537 A1, bekannte Reinigungsvorrichtung ist in den Fig. 2a und 2b dargestellt. Der nachstehend erläuterte Grundaufbau dieser bekannten Reinigungsvorrichtung kann auch bei erfindungsgemäßen Reinigungsvorrichtungen vorgesehen sein.

Fig. 2a zeigt eine mögliche Ausgestaltung einer Doppel- oder Zwillingsbürste einer bekannten Reinigungsvorrichtung, die zwei Bürstenanordnungen 213 umfasst, die zu beiden Seiten eines Basisteils 211 angeordnet und mit dem Basisteil 211 derart verbunden sind, dass ein in das Basisteil 211 integrierter Fluidantrieb (in Fig. 2a nicht dargestellt) beide Bürstenanordnungen 213 gleichzeitig mit gleichem Drehsinn in eine Reinigungsbewegung versetzen kann, bei der es sich um eine Rotationsbewegung um eine gemeinsame Rotationsachse 229 handelt.

Fig. 2a zeigt insbesondere einen Modulaufbau der Bürstenanordnungen 213, der dazu dient, die Arbeitsbreite der Reinigungsvorrichtung an die jeweilige Anwendung anzupassen. In dem dargestellten Ausführungsbeispiel umfasst jede Bürstenanordnung 213 ein Basismodul 217, zwei Zwischenmodule 221 sowie ein Endmodul 219.

Da der Fluidantrieb und das Basisteil 211 derart ausgelegt sind, dass über einen nachstehend näher erläuterten Aufnahmeabschnitt 233 in das Basisteil 211 einströmendes Fluid nach Verlassen des Fluidantriebs in das Innere eines mit Borsten versehenen Außenmantels 249 der Bürstenanordnung 213 strömt, um von dort über nicht dargestellte Austrittsöffnungen am Umfang des Außenmantels 249 austreten und die Beborstungen bzw. den zu reinigenden Gegenstand benetzen zu können, ist das Endmodul 219 axial endseitig geschlossen.

Wie Fig. 2b zeigt, umfasst das Basisteil 211 einen zylindrischen Abschnitt 259, dessen Mittelachse mit der Rotationsachse 229 der Bürstenanordnungen 213 zusammenfällt und der ein sich axial erstreckendes Gehäuse 253 für einen Fluidantrieb umfasst.

Des Weiteren umfasst das Basisteil 211 einen im Wesentlichen radial abstehenden Zuleitungsabschnitt 261, der eine bezüglich der Rotationsachse 229 tangential verlaufende Durchführung 241 sowie einen in die Durchführung 241 mündenden, einen vergrößerten Querschnitt aufweisenden Aufnahmeabschnitt 233 umfasst.

Die vergleichsweise schmale Durchführung 241 dient zur Aufnahme eines relativ dünnen, stiftförmigen Strahlrohrabschnitts 263, während der Aufnahmeabschnitt 233 zur Aufnahme eines hinsichtlich des Durchmessers gegenüber dem Strahlrohrabschnitt 263 vergrößerten Erweiterung 239 dient, die in Strömungsrichtung des Fluids in den Strahlrohrabschnitt 263 übergeht.

Der Strahlrohrabschnitt 263 und die Erweiterung 239 sind endseitige Abschnitte einer Fluidzufuhrleitung 225, die insbesondere als Lanze ausgebildet ist und über welche die Reinigungsvorrichtung an eine nicht dargestellte Fluiddruckquelle, insbesondere an einen handelsüblichen Hochdruckreiniger, angeschlossen werden kann.

In dem dargestellten Ausführungsbeispiel erstreckt sich das das Strahlrohr 263 und die Erweiterung 239 umfassende Ende der Leitung 225 im mit dem Basisteil 211 zusammengesteckten Zustand tangential zur Rotationsachse 229.

Das Basisteil 211 ist im Bereich des Aufnahmeabschnitts 233 mit einer Sicherung 237 versehen, die im zusammengesetzten Zustand in eine Aussparung 235 der Erweiterung 239 der Leitung 225 eingreift und ein unbeabsichtigtes Herausziehen der Leitung 225 aus dem Basisteil 211 verhindert.

Am freien Ende des Strahlrohres 263 ist ein auswechselbares Fluidausstoßorgan in Form eines Düsenelements 227 vorgesehen. Die Austrittsöffnung der Düse 227 dient als Fluidaustritt, der dergestalt ausgerichtet ist, dass eine nicht dargestellte Turbine des Fluidantriebs mit einem Fluidstrahl beaufschlagt wird. Der erwähnte Fluidantrieb ist in jenem Bereich des zylindrischen Abschnitts 259 des Basisteils 211 angeordnet, der von dem Gehäuse 253 umgeben ist.

Umgeben wird das Gehäuse 253 in einem mittleren Bereich von einem flachen kreisringscheibenförmigen Flanschabschnitt 265, der einstückig mit dem zylindrischen Gehäuse 253 verbunden ist und von dem Gehäuse 253 radial absteht, wobei von dem Flanschabschnitt 265 der Zuleitungsabschnitt 261 in radialer Richtung ausgeht. Sowohl der Flanschabschnitt 265 als auch der Zuleitungsabschnitt 261 sind in Richtung der Rotationsachse 229 extrem schmal bzw. dünn ausgebildet, um den vom Basisteil 211 eingenommenen Axialbereich zwischen den beiden Bürstenanordnungen 213 (vgl. Fig. 2a) zu minimieren.

Vorzugsweise ist das Basisteil 211 als ein Mehrkomponentenbauteil ausgebildet, das einen inneren Festigkeitsträger insbesondere in Form eines Metallblechs umfasst, der mit seinen Flachseiten senkrecht zur Rotationsachse 229 orientiert ist. Dieses Blech kann mit Kunststoff umspritzt sein, um die gewünschte Form bzw. Struktur zu realisieren. Insgesamt lässt sich hierdurch eine extrem stabile und biegesteife Ausgestaltung für das Basisteil 11 erreichen, wobei dies bei einem denkbar geringen Gewicht des Basisteils 11 ermöglicht wird.

Was die nachstehend beschriebenen Ausführungsformen der Erfindung anbetrifft, so sind jeweils das Reinigungsorgan 13, der Fluidantrieb 17, die Antriebseinheit oder die Antriebseinheiten 23 des Fluidantriebs 17 sowie die durch Fluidwege 25 veranschaulichte Zufuhr von Fluid, insbesondere Wasser, zum Fluidantrieb 17 abstrahiert dargestellt, um das jeweilige Antriebskonzept besser zu veranschaulichen. Wie vorstehend erwähnt, können die erfindungsgemäßen Reinigungsvorrichtungen jeweils einen Grundaufbau aufweisen, wie er in Verbindung mit Fig. 1 und mit den Fig. 2a und 2b erläutert wurde.

Die Erfindung zeichnet sich gegenüber dem vorstehend erläuterten Stand der Technik dadurch aus, dass der Fluidantrieb 17 in unterschiedlichen Zuständen betrieben werden kann und dass eine Schalteinrichtung vorgesehen ist, mit der zwischen den unterschiedlichen Betriebszuständen des Fluidantriebs 17 gewechselt werden kann. Auch die Schalteinrichtung 19 ist in den nachstehend erläuterten Figuren schematisch angedeutet. Anhand der Figuren und der zugehörigen nachfolgenden Beschreibung kann der Fachmann aber die jeweilige Ausführungsform problemlos praktisch ausführen.

Bei dem Reinigungsorgan 13 handelt es sich jeweils um eine zylindrische Bürstenwalze, die während des Betriebs um eine Drehachse 61 rotiert. Um das jeweilige Antriebskonzept zu veranschaulichen, sind die Antriebseinheiten 23 jeweils um 90° verdreht dargestellt, so dass die von den Antriebseinheiten 23 definierten Drehachsen senkrecht zur Drehachse 61 verlaufend dargestellt sind. In der tatsächlichen Ausführungsform sind von den Antriebseinheiten 23 definierte Drehachsen und die Drehachse 61 der Bürstenwalze entweder parallel versetzt zueinander angeordnet oder fallen zusammen.

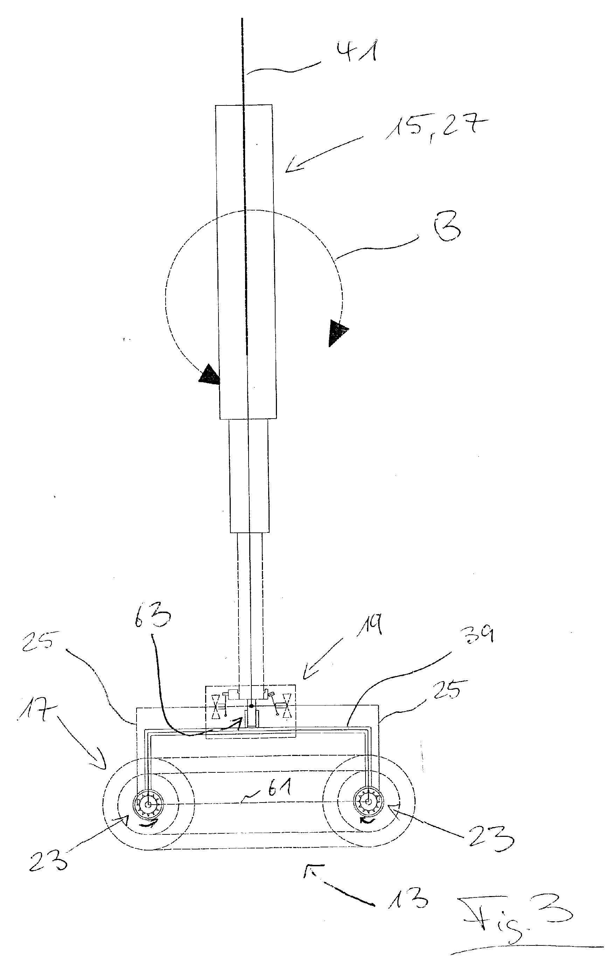

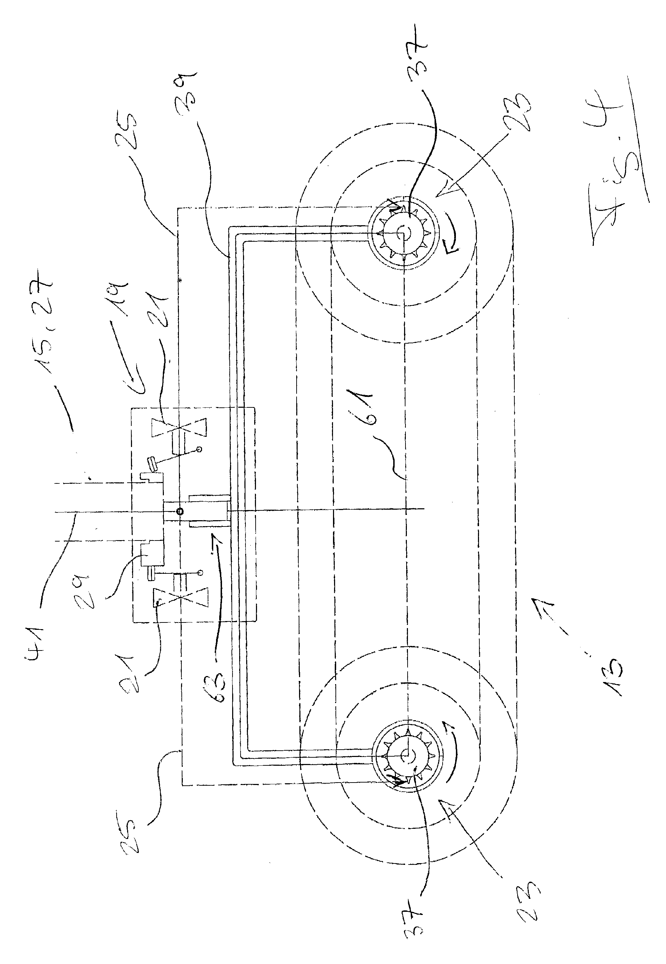

Im Ausführungsbeispiel der Fig. 3 und 4 ist die Bürstenwalze 13 an ihren beiden Stirnseiten jeweils von einer Antriebseinheit 23 des Fluidantriebs 17 gehalten, die an den "Zinken" einer gabelförmigen mechanischen Halterung 39 angebracht sind oder die "Zinken" der gabelartigen Halterung 39 bilden. Der Grundaufbau dieser erfindungsgemäßen Ausführungsform entspricht folglich jenem der Fig. 1.

Die Halterung 39 dient außerdem als Drehlager 63 für eine hier teleskopartig ausgebildete Haltestange 15, die gleichzeitig als Betätigungseinrichtung 27 für eine Schalteinrichtung 19 ausgebildet ist.

Im Inneren der Teleskopstange 15 verläuft eine Fluidzufuhrleitung 41, die sich im Bereich der Schalteinrichtung 19 auf zwei Fluidwege 25 verzweigt, die jeweils zu einer der Antriebseinheiten 23 führt.

Wie der vergrößerte Ausschnitt der Fig. 4 zeigt, wird über den einen Fluidweg 25 ein Turbinen- oder Schaufelrad 37 der einen Antriebseinheit 23 in einem Drehsinn beaufschlagt, wohingegen an der anderen Stirnseite der Bürstenwalze 13 eine gegensinnige Beaufschlagung der Antriebseinheit 23 erfolgt, wie es durch die Pfeile angedeutet ist.

Während des Reinigungsbetriebs ist jeweils nur einer der beiden Fluidwege 25 freigegeben, so dass die Bürstenwalze 13 nur von einer der beiden Antriebseinheiten 23 aktiv angetrieben und von der jeweils anderen Antriebseinheit 23 lediglich derart gehalten wird, dass sich die Bürstenwalze 13 drehen kann. In Abhängigkeit davon, welche Antriebseinheit 23 beaufschlagt wird, d.h. welcher Fluidweg 25 freigegeben ist, rotiert die Bürstenwalze 13 entweder vorwärts oder rückwärts.

Diesen Betriebszuständen des Fluidantriebs 17 entspricht jeweils eine von mehreren unterschiedlichen Schaltkonfigurationen der Schalteinrichtung 19, wobei diese Schaltkonfigurationen durch unterschiedliche Relativstellungen von Ventilen 21 realisiert sind. Es ist schematisch angedeutet, dass mit den beiden Ventilen 21 eine als Stellorgan dienende Exzenterscheibe 29 zusammenwirkt, die an der Teleskopstange 15 angebracht ist und die durch Verdrehen der gleichzeitig als Betätigungseinrichtung 27 dienenden Haltestange 15 relativ zu der Ventilanordnung 21 der Schalteinrichtung 19 verdreht werden kann, um auf diese Weise unterschiedliche Ventilstellungen zu bewirken.

Je nach Drehstellung der Exzenterscheibe 29 befindet sich eines der Ventile 21 in einer Schließstellung, während das andere Ventil 21 eine Freigabestellung einnimmt.

Auf diese Weise kann der Benutzer durch Verdrehen der Haltestange 15 die Bürstenwalze 13 mittels des Fluidantriebs 17 entweder vorwärts oder rückwärts laufen lassen.

Dieses Schalt- bzw. Betätigungskonzept ermöglicht eine einfache Implementierung zusätzlicher Betriebszustände. So kann beispielsweise das Stellorgan 29 derart ausgebildet sein, dass in zumindest einer Drehstellung der Haltestange 15 beide Ventile 21 geschlossen sind. In diesem Betriebszustand gelangt kein Fluid über die beiden Fluidwege 25 zu den beiden Antriebseinheiten 23, d.h. die Bürstenwalze 13 dreht sich nicht. In einer solchen Konfiguration der Schalteinrichtung 19 kann alternativ vorgesehen sein, dass das zugeführte Wasser auf andere Weise genutzt wird, indem es beispielsweise durch eine Flach- oder Punktstrahldüse auf die jeweils zu reinigende Fläche aufgebracht wird, um beispielsweise hartnäckige Verschmutzungen zu beseitigen. Eine derartige Flachstrahl- oder Punktstrahldüse ist insbesondere derart angeordnet, dass der austretende Wasserstrahl an der Bürstenwalze 13 vorbei auf die zu reinigende Fläche gelangt.

Alternativ oder zusätzlich zu einem derartigen Strahlbetrieb kann ein Betriebszustand und somit eine Drehstellung der Haltestange 15 vorgesehen sein, in welcher das Wasser nur unter geringem Druck ausgestoßen wird. Ein derartiger Niederdruckbetrieb kann beispielsweise für ein Wegspülen von Verschmutzungen oder Reinigungsmittelrückständen eingesetzt werden. Eine weitere alternative oder zusätzliche Drehstellung der Haltestange 15 kann dazu dienen, aus einem nicht dargestellten Vorrat ein Zusatzmittel anzusaugen, das zusammen mit dem zugeführten Wasser auf die Antriebseinheiten 23 oder direkt auf die zu reinigende Fläche aufgebracht wird, beispielsweise über eine Strahldüse.

Das erfindungsgemäße Umschaltkonzept ermöglicht somit auf einfache und zuverlässige Weise die Realisierung einer multifunktionalen Reinigungsvorrichtung.

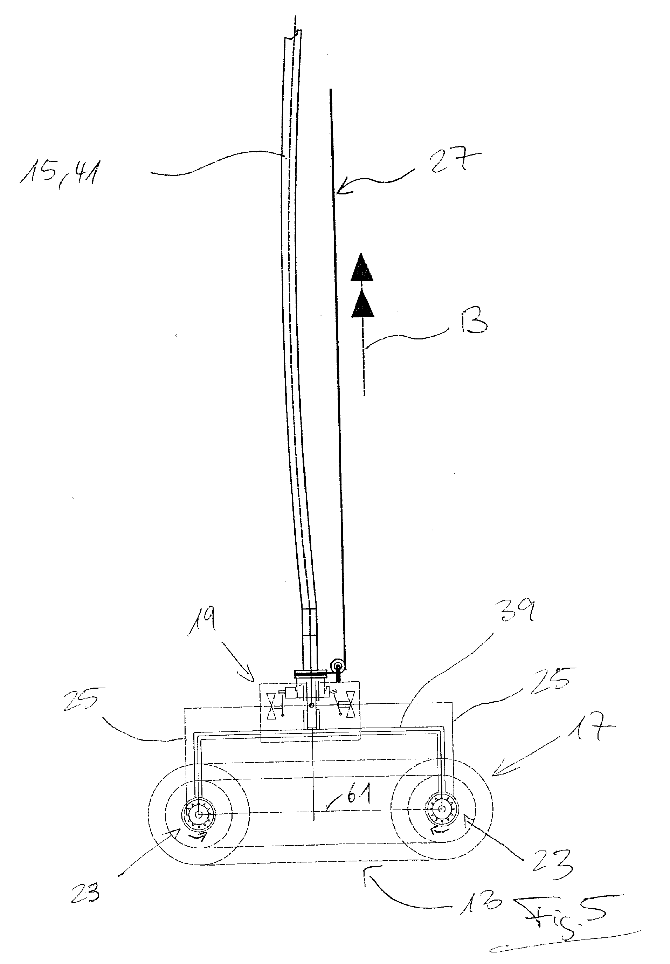

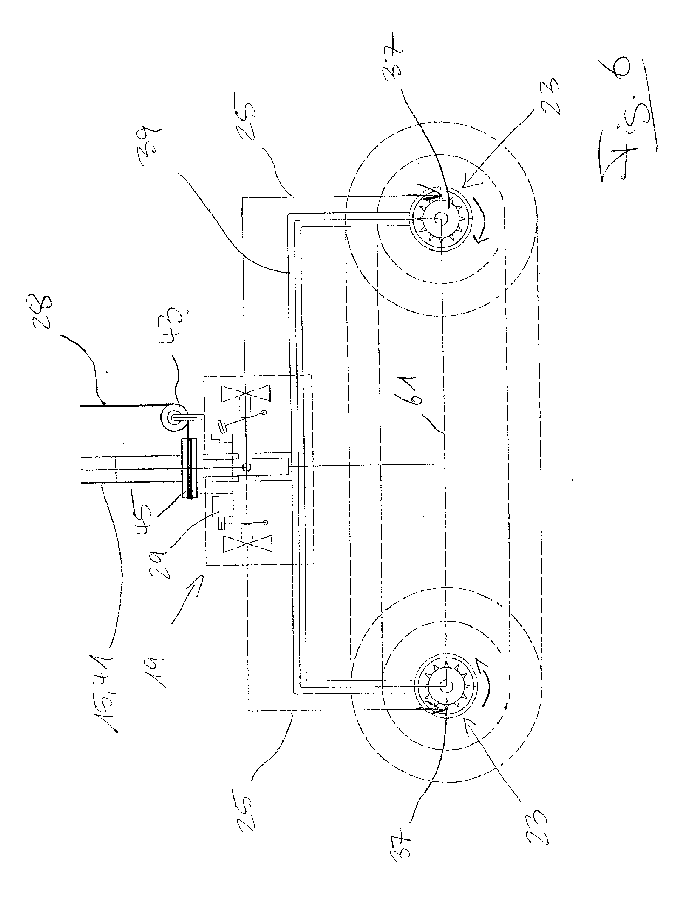

Während die vorstehend erläuterte Reinigungsbürste 13 vom Benutzer über die Teleskopstange 15 auf der jeweils zu reinigenden Fläche hin- und herbewegt werden kann, zeigen die Fig. 5 und 6 ein Ausführungsbeispiel, bei dem keine starre Halteeinrichtung, sondern ein Fluidzufuhrschlauch vorgesehen ist, der gleichzeitig als Halteorgan 15 und als Fluidzufuhrleitung 41 dient. Eine derartige Reinigungsvorrichtung kommt insbesondere dann zum Einsatz, wenn die Reinigungsbürste 13 unter Ausnutzung der Gewichtskraft an einer geneigten zu reinigenden Fläche herabgelassen werden kann, wobei sie mit der Fluidzufuhrleitung 41 festgehalten bzw. die geneigte Fläche hinaufgezogen werden kann.

Auch bei einem derartigen Konzept zum Halten der Bürstenwalze 13 ist es möglich, eine hier wiederum zwei Ventile 21 aufweisende Schalteinrichtung 19 entsprechend zu betätigen. Ein Beispiel für eine solche Betätigung ist in den Fig. 5 und 6 veranschaulicht. Die Betätigungseinrichtung umfasst hier ein Zugseil 28, das mittels einer Umlenkrolle 43 aus einem sich parallel zur Fluidzufuhrleitung 41 erstreckenden Verlauf um 90° umgelenkt und auf einen Drehträger 95 aufgewickelt ist.

Durch Ziehen am Zugseil 28 kann von einem Benutzer der relativ zur Fluidzufuhrleitung 41 drehbar gelagerte Drehträger 45 samt drehfest angebrachter Exzenterscheibe 29 in Rotation versetzt werden, wodurch wiederum entsprechend dem Ausführungsbeispiel der Fig. 3 und 4 eine der vorgesehenen Konfigurationen der Schalteinrichtung 19 hergestellt und somit in den jeweils gewünschten Betriebszustand des Fluidantriebs 17 gewechselt werden kann.

Hierbei kann durch geeignete Mittel erzielt werden, dass nach einer Ziehbetätigung des Zugseils 28 und somit im Anschluss an einen Schaltvorgang ein Rückholmechanismus das Zugseil 28 wieder einzieht, ohne dass der Schaltvorgang rückgängig gemacht wird, so dass durch eine erneute Ziehbetätigung des Zugseils 28 eine weitere Stellbewegung der Exzenterscheibe 29 initiiert wird, um die nächste Schaltkonfiguration der Schalteinrichtung 19 zu bewirken und somit in den nächsten Betriebszustand des Fluidantriebs 17 zu wechseln.

Insbesondere kann ein nach Art einer Ratsche oder Knarre wirksamer Betätigungsmechanismus vorgesehen sein, um eine solche Betätigung der Schalteinrichtung 19 zu realisieren.

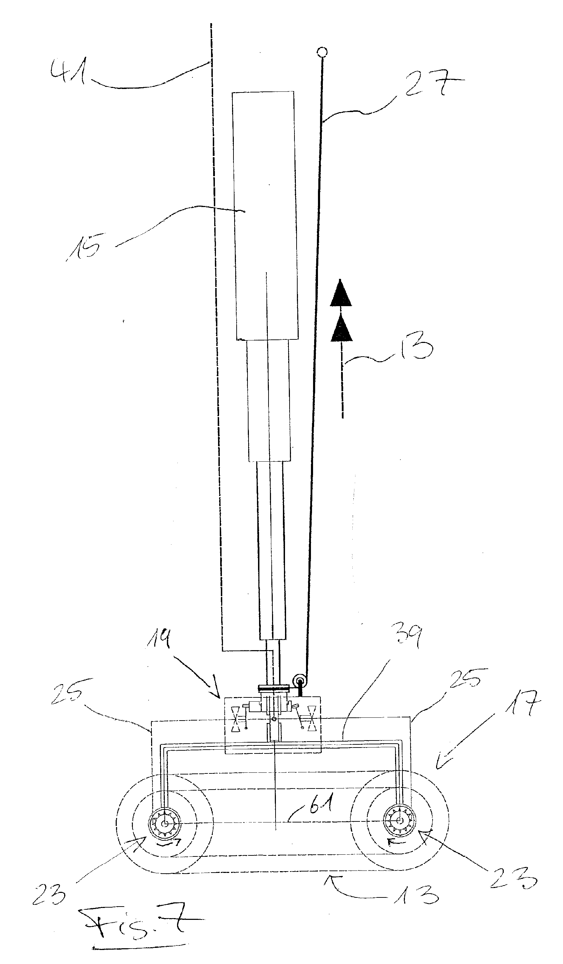

Während bei den beiden zuvor erläuterten Ausführungsbeispielen das Wasser jeweils innerhalb der Halteeinrichtung 15 (Haltestange oder Schlauch) und insofern "intern" zugeführt wird, veranschaulicht Fig. 7 die Möglichkeit einer externen Fluidzufuhr über eine außerhalb der Halteeinrichtung 15 verlaufende Fluidzufuhrleitung 41. Außerdem zeigt Fig. 7, dass erfindungsgemäß der Einsatz eines Zugseilmechanismus zur Betätigung der Schalteinrichtung 19 nicht auf die Verwendung eines flexiblen bzw. biegsamen Halteorgans beispielsweise in Form eines Fluidschlauchs entsprechend dem Ausführungsbeispiel der Fig. 5 und 6 beschränkt ist. Vielmehr kann ein derartiger Betätigungsmechanismus auch in Verbindung mit einer Haltestange, hier im Ausführungsbeispiel der Fig. 7 einer Teleskopstange entsprechend dem Ausführungsbeispiel der Fig. 3 und 4, eingesetzt werden. Im Ausführungsbeispiel der Fig. 7 dient die Haltestange 15 somit nicht als Betätigungseinrichtung 27, wie es beim Ausführungsbeispiel der Fig. 3 und 4 der Fall ist, bei welcher die Betätigungsbewegung B eine Drehbewegung der Haltestange 15 ist, wohingegen bei den anderen beiden Ausführungsbeispielen die Betätigungsbewegung B eine Ziehbewegung parallel zur Längserstreckung des hier als Fluidschlauch ausgebildeten Halteorgans 15 ist.

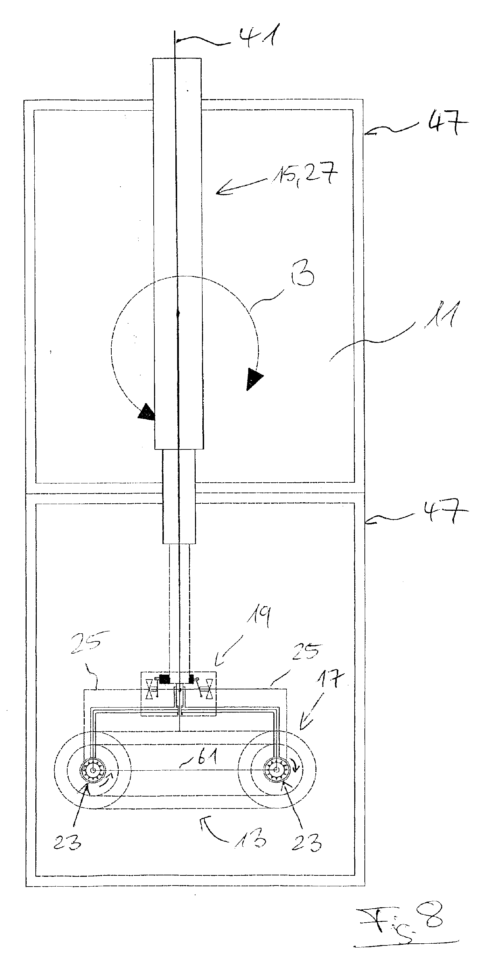

Fig. 8 zeigt die Reinigungsvorrichtung in der Ausführung gemäß den Fig. 3 und 4 an einer zu reinigenden Fläche 11, die von mehreren Panels 47 einer Solar- oder Photovoltaikanlage gebildet wird. Zwischen derartigen Panels 47 können sich Übergänge befinden, für deren Reinigung die erfindungsgemäße Reinigungsvorrichtung besonders vorteilhaft ist, worauf nachstehend näher eingegangen wird.

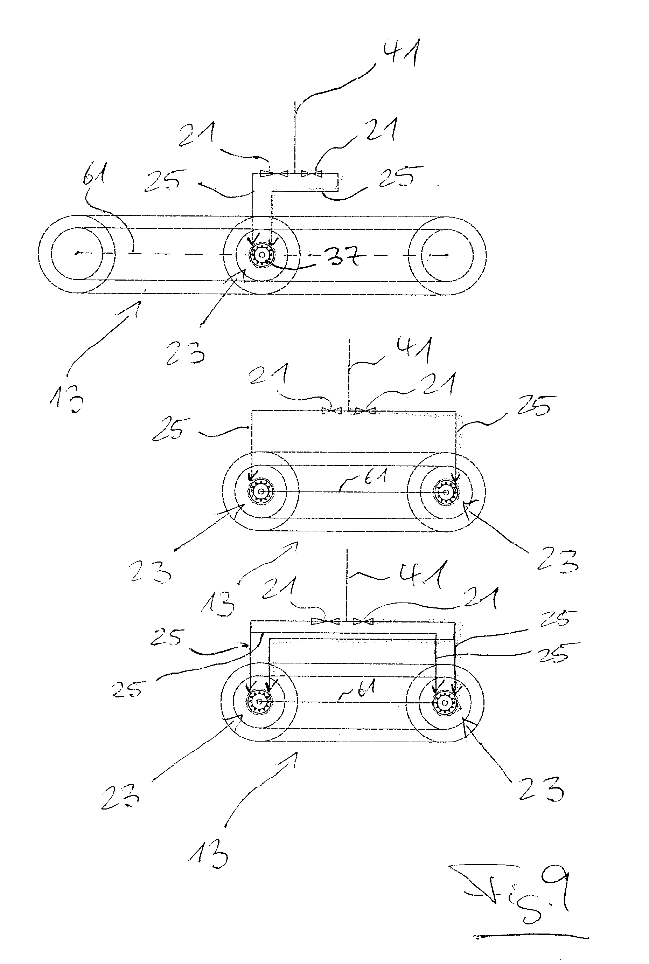

Fig. 9 veranschaulicht mehrere mögliche erfindungsgemäße Antriebskonzepte.

Die obere Darstellung in Fig. 9 veranschaulicht eine Reinigungsvorrichtung mit einem für sich genommen bekannten Grundaufbau gemäß den Fig. 2a und 2b mit einer Antriebseinheit 23, die mittig zwischen zwei gemeinsam das Reinigungsorgan 13 bildenden Bürstenwalzen angeordnet ist. Die Fluidzufuhrleitung 41 verzweigt in zwei Fluidwege 25, die beide zu demselben Turbinen- bzw. Schaufelrad 37 der Antriebseinheit 23 führen, wobei aber die jeweiligen Fluidausstoßorgane bzw. -düsen oder Fluidaustrittsöffnungen der Fluidwege 25 derart angeordnet bzw. ausgerichtet sind, dass sie das Turbinen- bzw. Schaufelrad 37 mit unterschiedlichem Drehsinn beaufschlagen können. Durch entsprechende Beaufschlagung der Ventile 21 kann entweder der eine oder der andere Fluidweg 25 freigegeben und somit die Drehrichtung der Bürstenwalzen, die gleichzeitig von der Antriebseinheit 23 angetrieben werden, je nach Bedarf festgelegt werden.

Die mittlere Darstellung in Fig. 9 veranschaulicht das in Verbindung mit den vorstehenden erfindungsgemäßen Ausführungsformen erläuterte Antriebskonzept, bei dem eine Bürstenwalze stirnseitig von zwei Antriebseinheiten 23 gehalten und somit stirnseitig angetrieben wird. Zu jeder der beiden Antriebseinheiten 23 führt lediglich ein Fluidweg 25, so dass in Abhängigkeit von der Schaltkonfiguration der die Ventile 21 umfassenden Schalteinrichtung während eines Reinigungsbetriebs jeweils nur eine der beiden Antriebseinheiten 23 aktiv ist, die somit die Bürstenwalze 13 alleine antreibt.

Die untere Darstellung der Fig. 9 veranschaulicht ein Antriebskonzept, bei dem ausgehend von dem Antriebskonzept gemäß der mittleren Darstellung in Fig. 9 jeder Fluidweg 25 in Strömungsrichtung gesehen hinter dem jeweiligen Ventil 21 verzweigt, so dass zu jeder Antriebseinheit 23 zwei Fluidwege 25 führen und folglich für jede Antriebseinheit 23 eine Situation entsprechend dem Antriebskonzept der oberen Darstellung in Fig. 9 vorliegt. Somit wird die Bürstenwalze 13 für jede Drehrichtung jeweils von beiden Antriebseinheiten 23 gemeinsam angetrieben, die dann jeweils mit gleichem Drehsinn rotieren.

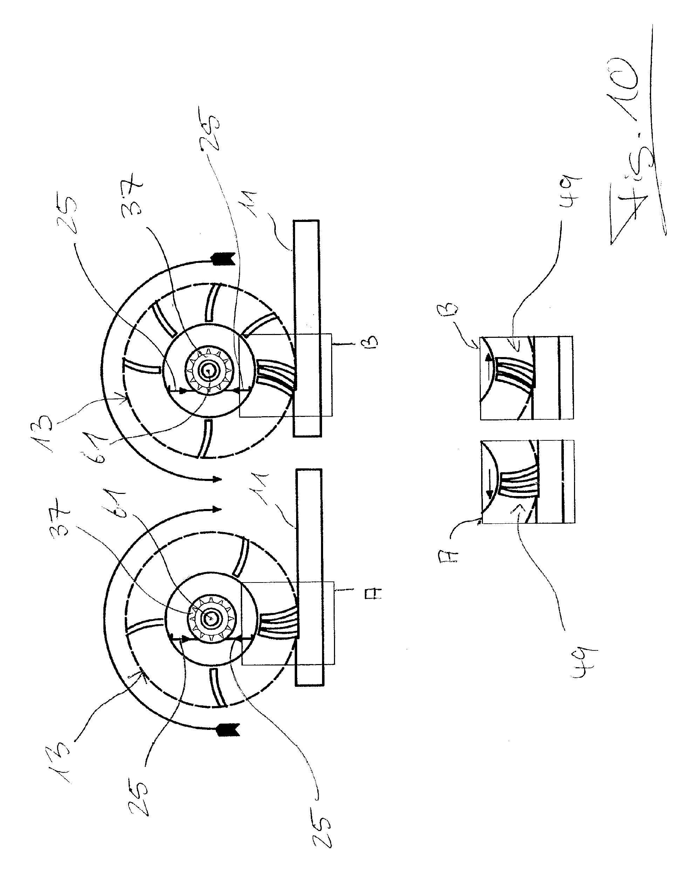

Fig. 10 veranschaulicht die Wirkung von mit unterschiedlichem Drehsinn angetriebenen Bürstenwalzen 13 bei der Reinigung einer Oberfläche 11. Im linken Teil der Darstellung in Fig. 10 mit dem vergrößerten Ausschnitt A ist der von unten kommende Fluidweg 25 freigegeben, so dass sich das Turbinen- bzw. Schaufelrad 37 und somit die Bürstenwalze 13 im Uhrzeigersinn um die Drehachse 61 dreht. Im rechten Teil der Darstellung in Fig. 10 sind die Verhältnisse umgekehrt, d.h. der von oben kommende Fluidweg 25 ist freigegeben, so dass sich die Bürstenwalze 13 im Gegenuhrzeigersinn dreht.

Aus dem Vergleich der Stellungen der Borsten 49 der Bürstenwalze 13 für die beiden entgegengesetzten Drehrichtungen ist ersichtlich, dass im Bereich von insbesondere stufenförmigen Übergängen in der zu reinigenden Oberfläche 11, wie sie beispielsweise an Übergängen zwischen benachbarten Panels 47 (vgl. Fig. 8) auftreten können, ein Wechsel der Drehrichtung der Bürstenwalze 13 vorteilhaft ist, um auch solche Übergänge optimal reinigen zu können.

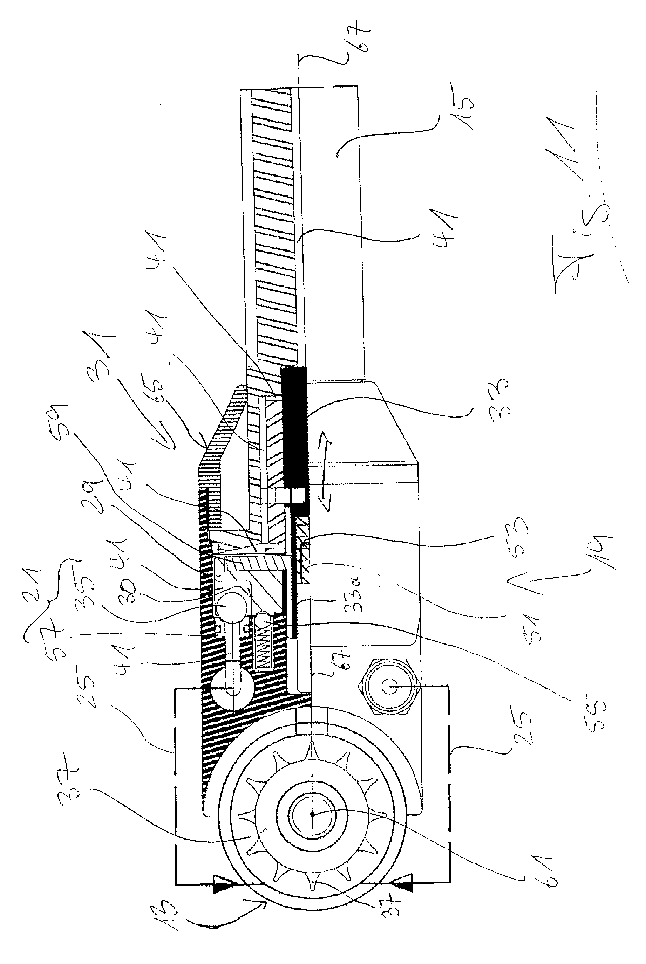

Fig. 11 zeigt schematisiert eine Ausführungsform, bei der für die Schalteinrichtung 19 eine Impulssteuerung 31 vorgesehen ist. Die Schalteinrichtung 19 und die Impulssteuerung 31, die zusammen als eine Impulsschaltung bezeichnet werden können, sind in einem Gehäuse 65 untergebracht, von welchem zwei Fluidwege 25 ausgehen, die beide zu demselben Turbinen- bzw. Schaufelrad 37 einer Antriebseinheit führen, um z.B. ein Antriebskonzept entsprechend der oberen Darstellung in Fig. 9 zu realisieren.

In dem Gehäuse 65 ist ein zylindrisches Stellorgan 29 in Form eines Käfigrotors um eine Drehachse 67 drehbar gelagert, in welchem eine Mehrzahl von in Umfangsrichtung verteilt angeordneten, jeweils einen Schaltbereich bildenden Kammern 30 ausgebildet sind. Jede Kammer 30 ist Teil einer Fluidzufuhrleitung 41, die über eine grundsätzlich beliebig ausgestaltete, hier in Form einer Haltestange vorgesehene Halteeinrichtung 15 und durch den Übergang zwischen der Halteeinrichtung 15 und dem Gehäuse 65 hindurch zu einem Ventilsitz 57 und schließlich zum Fluidweg 25 führt, wenn sich der Käfigrotor 29 in der entsprechenden Drehstellung befindet, in welcher die betreffende Kammer 30 mit dem betreffenden Ventilsitz 57 ausgerichtet ist.

Die Anordnung ist derart gewählt, dass in jeder Drehstellung des Käfigrotors 29 jeder Fluidweg 25 und somit jeder Ventilsitz 57 mit einer der Kammern 30 ausgerichtet ist.

Je nach konkreter Anwendung ist in einer der Kammern 30 oder ist in mehreren Kammern 30 jeweils ein hier als Kugel ausgebildetes Schließelement 35 gefangen, das zusammen mit dem jeweiligen Ventilsitz 57 ein Ventil 21 für den betreffenden Fluidweg 25 bildet. Ist eine Kammer 30 mit darin gefangener Kugel 35 mit einem Ventilsitz 57 und somit dem entsprechenden Fluidweg 25 ausgerichtet, sorgt der in der Kammer 30 herrschende Fluiddruck dafür, dass die Kugel 35 im Ventilsitz 57 und somit dieses Ventil 21 dauerhaft in der Schließstellung gehalten ist, solange sich die Drehstellung des Käfigrotors 29 nicht ändert.

Die Verteilung der Kugeln 35 in den Kammern 30 ist derart gewählt, dass der andere, in Fig. 11 untere Fluidweg 25 freigegeben ist, wenn - wie dargestellt - der in Fig. 11 obere Fluidweg 25 durch das Ventil 21 verschlossen ist. Die mit dem unteren Fluidweg 25 ausgerichtete Kammer 30 ist folglich nicht mit einer Kugel 35 versehen, so dass das Fluid ungehindert durch die Fluidzufuhrleitung 41 in den unteren Fluidweg 25 strömen und das Turbinen- bzw. Schaufelrad 37 von unten beaufschlagen kann, so dass sich die Bürstenwalze 13 im Uhrzeigersinn dreht.

Generell ist an dieser Stelle zu erwähnen, dass zumindest diejenigen Turbinen- bzw. Schaufelräder 37, zu denen zwei jeweils wahlweise freigebbare oder verschließbare Fluidwege 25 führen, mit symmetrischen Schaufeln 37a derart versehen sind, dass sie sowohl aus der einen als auch aus der anderen Richtung mit Fluid beaufschlagt werden können, um einen Drehantrieb mit beiden Drehrichtungen bewirken zu können.

Um den Betriebszustand des Fluidantriebs zu wechseln, d.h. eine Stellbewegung des Käfigrotors 29 zu veranlassen, umfasst die Impulssteuerung 31 einen nach Art einer Ratsche oder Knarre wirksamen Betätigungsmechanismus. Eine lineare Hinund Herbewegung eines als Kolben 33 ausgebildeten Betätigungsorgans wird in eine Drehbewegung des Käfigrotors 29 umgesetzt. Fig. 11 zeigt den drucklosen Zustand der Anordnung, in welcher der Kolben 33 durch eine Druckfeder 51 in Fig. 11 nach rechts getrieben ist. Wird die Fluidzufuhrleitung 41 unter Druck gesetzt, bewegt sich der Kolben 33 gegen die Rückstellkraft der Feder 51 nach links bis zu einem Anschlag 53.

Bei dieser gewissermaßen eine "Ausholbewegung" darstellenden Bewegung des Kolbens 33 wird ein Steuerabschnitt 59 des Käfigrotors 29 von einem Betätigungsabschnitt 33a des Kolbens 33 nicht beaufschlagt, d.h. beim Unterdrucksetzen der Fluidzufuhrleitung 41 ändert sich der Schaltzustand der Schalteinrichtung 19 und somit die Drehrichtung der Bürstenwalze 13 nicht. Eine federbelastete Rastkugel 55 hält den Käfigrotor 29 in der jeweiligen Drehstellung.

Um einen Schaltvorgang auszulösen, unterbricht der Benutzer an einem von der Bürstenwalze 13 entfernt gelegenen, nicht dargestellten Haltebereich der Halteeinrichtung 15 die Zufuhr von Fluid in die Leitung 41, woraufhin sich der Kolben 33 aufgrund der Rückstellkraft der Feder 51 in Fig. 11 nach rechts bewegt.

Der Betätigungsabschnitt 33a des Kolbens 33 wirkt bei dieser Bewegung des Kolbens 33 mit dem Steuerabschnitt 59 derart zusammen, dass der Käfigrotor 29 gegen die Rückstellkraft der federbelasteten Rastkugel 55 in die nächste Drehstellung gedreht wird, in der die Rastkugel 55 wieder in den Käfigrotor 29 einrastet. Dabei wird der in Fig. 11 obere Ventilsitz 57 mit einer leeren Kammer 30 und der in Fig. 11 untere, nicht dargestellte Ventilsitz mit einer eine Kugel 35 enthaltenden Kammer 30 ausgerichtet. In diesem Betriebszustand wird das Turbinen- bzw. Schaufelrad 37 von oben über den betreffenden Fluidweg 25 mit einem Fluidstrahl beaufschlagt, so dass sich die Bürstenwalze 13 im Gegenuhrzeigersinn dreht.

Bei dieser Fern-Impulssteuerung braucht ein Benutzer lediglich die Fluidzufuhr kurzzeitig zu unterbrechen, um einen Schaltvorgang auszulösen. Dieses Konzept hat den Vorteil, dass die in der Feder 51 gespeicherte Energie zum Bewirken des eigentlichen Schaltvorgangs, d.h. zum Bewegen des Kolbens 33 in Fig. 11 nach rechts, ausgenutzt werden kann, so dass der Schaltvorgang im drucklosen Zustand erfolgen kann. Der Käfigrotor 29 braucht folglich nicht bei in den Ventilsitz 57 hinein beaufschlagter Kugel 35 stattzufinden. Dieses erfindungsgemäße drucklose Schalten erfordert daher vergleichsweise geringe Schaltkräfte.

Die Anzahl der Fluidwege 25 und der zugeordneten Ventilsitze 57 ist grundsätzlich nicht beschränkt. Im Käfigrotor 29 ist zumindest für jeden Ventilsitz 57 eine Kammer 30 vorgesehen, wobei die Verteilung von Ventilkugeln 35 in den Kammern 30 in Abhängigkeit von den für die gewünschten Betriebszustände erforderlichen Schaltkonfigurationen gewählt wird.

Dabei ist es z.B. möglich, gleichzeitig mehrere Fluidwege 25 freizugeben, um entweder zwei separate Antriebseinheiten 23 gleichzeitig mit Fluid zu beaufschlagen oder zusätzlich zu einem Rotationsantrieb der Bürstenwalze 13 einen z.B. Flach- oder Punktstrahlbetrieb, einen Niederdruckbetrieb und/oder einen Betrieb mit chemischen Reinigungszusätzen über eine oder mehrere separate Düsen zu realisieren, wobei derartige Funktionen - einzeln oder kombiniert - auch bei deaktiviertem Rotationsantrieb erfolgen können. Der Funktionsvielfalt sind wegen der "mechanischen Programmierbarkeit" der Schalteinrichtung 19 durch die Verteilung der Kugeln 35 in den Kammern 30 praktisch keine Grenzen gesetzt.

Des Weiteren kann die Anordnung derart gewählt werden, dass zumindest eine Drehstellung des Käfigrotors 29 existiert, in welcher jeder Fluidweg 25 mit einer Kammer 30 ausgerichtet ist, in der sich ein Schließelement 35 befindet. Durch die Auswahl einer solchen Drehstellung ist es dem Benutzer möglich, das Reinigungsorgan 13 vorübergehend anzuhalten.

Eine in den Figuren nicht dargestellte weitere Möglichkeit zur Realisierung einer Impulssteuerung besteht darin, die Halteeinrichtung 15 durch geeignete Mittel derart längenveränderlich auszubilden, dass ein Benutzer durch eine insbesondere ruckartige Drück- oder Ziehbewegung eine Längenveränderung der Halteeinrichtung 15 bewirken kann und diese Längenveränderung in eine Stellbewegung eines Stellorgans umgesetzt wird.

Eine solche Impulssteuerung ist besonders vorteilhaft, aber nicht nur, dann realisierbar, wenn die Gewichtskraft des Reinigungsorgans 13 ausgenutzt werden kann, insbesondere also dann, wenn als Halteeinrichtung ein Seil oder ein gleichzeitig als Fluidzufuhrleitung dienender Schlauch zum Halten eines Reinigungsorgans 13 an einer geneigten zu reinigenden Fläche 11 eingesetzt wird.

Die Möglichkeit einer Längenveränderung des Halteseils bzw. Halteschlauchs kann beispielsweise dadurch realisiert werden, dass das Seil oder der Schlauch mit einer permanenten, beispielsweise durch eine Feder stabilisierten Ausbauchung versehen wird, die mittels eines Zugelements überbrückt ist, das an der vom Benutzer entfernt gelegenen Seite der Ausbauchung beispielsweise entsprechend dem Ausführungsbeispiel der Fig. 5 und 6 mit einem Drehträger 45 gekoppelt ist. Durch ruckartiges Ziehen an dem Halteseil bzw. an dem Halteschlauch kann aufgrund der Ausbauchung die Seil- bzw. Schlauchlänge verkürzt und so der Drehträger 45 betätigt werden.

Die Gewichtskraft des Reinigungsorgans 13 sorgt anschließend für die Wiederherstellung des Ausgangszustandes, ausgehend von welchem bei Bedarf vom Benutzer ein erneuter Schaltvorgang ausgelöst werden kann.

### Bezugszeichenliste

- 11: Oberfläche
- 13: Reinigungsorgan
- 15: Halteeinrichtung, Haltestange, Halteorgan
- 17: Fluidantrieb
- 19: Schalteinrichtung
- 21: Schaltorgan, Ventil
- 23: Antriebseinheit des Fluidantriebs
- 25: Fluidweg, Fluidleitung
- 27: Betätigungseinrichtung
- 28: Zugseil
- 29: Stellorgan, Exzenterscheibe, Käfigrotor
- 30: Kammer
- 31: Impulssteuerung
- 33: Betätigungsorgan
- 33a: Betätigungsabschnitt
- 35: Schließelement
- 37: Turbinen- oder Schaufelrad
- 37a: Schaufel
- 39: Halterung
- 41: Fluidzufuhrleitung
- 43: Umlenkrolle
- 45: Drehträger
- 47: Panel
- 49: Borsten
- 51: Feder
- 53: Anschlag
- 55: Rastkugel
- 57: Sitz
- 59: Steuerabschnitt
- 61: Drehachse
- 63: Drehlager
- 65: Gehäuse
- 67: Drehachse

- B: Betätigungsbewegung

## Patentansprüche

1. Vorrichtung zum Reinigen von Oberflächen (11), insbesondere von Solar- und/oder Photovoltaikanlagen, mit
zumindest einem während des Reinigungsbetriebs sich bewegenden, insbesondere rotierenden, Reinigungsorgan (13), insbesondere einer Bürstenwalze oder Tellerbürste,
einer Halteeinrichtung (15) für das Reinigungsorgan (13),
einem in unterschiedlichen Zuständen betreibbaren Fluidantrieb (17) für das Reinigungsorgan (13), und
einer Schalteinrichtung (19), mit der zwischen den unterschiedlichen Betriebszuständen des Fluidantriebs (17) gewechselt werden kann.

2. Vorrichtung nach Anspruch 1,
**dadurch gekennzeichnet,**
**dass** sich zwei Betriebszustände hinsichtlich der Bewegungsrichtung, insbesondere des Drehsinns, des Reinigungsorgans (13) voneinander unterscheiden, und/oder dass der Fluidantrieb (17) in zumindest einem der Betriebszustände aktiv und in einem anderen der Betriebszustände unterbrochen ist.

3. Vorrichtung nach einem der vorhergehenden Ansprüche,
**dadurch gekennzeichnet,**
**dass** die Schalteinrichtung (19) im Strömungsweg des Fluids zwischen einer Fluidzuführung und dem Reinigungsorgan (13) angeordnet ist, wobei insbesondere zumindest ein Teil der Schalteinrichtung (19) von dem Fluid durchströmt wird.

4. Vorrichtung nach einem der vorhergehenden Ansprüche,
**dadurch gekennzeichnet,**
**dass** die Schalteinrichtung (19) in unterschiedliche Schaltkonfigurationen bringbar ist, wobei zwischen den Schaltkonfigurationen der Schalteinrichtung (19) und den Betriebszuständen des Fluidantriebs (17) eine Zuordnung besteht, wobei insbesondere die Schaltkonfigurationen der Schalteinrichtung (19) durch Stellungen eines oder mehrerer Schaltorgane (21), insbesondere Ventile, definiert sind.

5. Vorrichtung nach einem der vorhergehenden Ansprüche,
**dadurch gekennzeichnet,**
**dass** der Fluidantrieb (17) eine oder mehrere Antriebseinheiten (23) umfasst und zu jeder Antriebseinheit (23) wenigstens ein Fluidweg (25) führt, wobei mittels der Schalteinrichtung (19) jeder Fluidweg (25) entweder freigebbar oder verschließbar ist, und/oder dass der Fluidantrieb (17) zumindest eine Antriebseinheit (23) umfasst, zu der wenigstens zwei Fluidwege (25) führen, wobei in einem ersten Betriebszustand ein erster Fluidweg freigegeben und ein zweiter Fluidweg verschlossen und in einem zweiten Betriebszustand der erste Fluidweg verschlossen und der zweite Fluidweg freigegeben ist, und/oder dass der Fluidantrieb (17) zumindest zwei Antriebseinheiten (23) umfasst, zu denen jeweils wenigstens ein Fluidweg (25) führt, wobei in einem ersten Betriebszustand der Fluidweg zu einer ersten Antriebseinheit freigegeben und der Fluidweg zu einer zweiten Antriebseinheit verschlossen und in einem zweiten Betriebszustand der Fluidweg zur ersten Antriebseinheit verschlossen und der Fluidweg zur zweiten Antriebseinheit freigegeben ist,

6. Vorrichtung nach einem der vorhergehenden Ansprüche,
**dadurch gekennzeichnet,**
**dass** die Schalteinrichtung (19) eine Ventilanordnung umfasst, und/oder dass die Schalteinrichtung (19) wenigstens ein Ventil (21) umfasst, das zumindest einem Fluidweg (25) zugeordnet und zwischen einer Freigabestellung und einer Schließstellung verstellbar ist.

7. Vorrichtung nach einem der vorhergehenden Ansprüche,
**dadurch gekennzeichnet,**
**dass** für die Schalteinrichtung (19) eine Betätigungseinrichtung (27) vorgesehen ist, mittels welcher die Schalteinrichtung (19) in unterschiedliche Schaltkonfigurationen bringbar ist, wobei insbesondere die Betätigungseinrichtung (27) ausschließlich mechanisch betreibbar ist.

8. Vorrichtung nach Anspruch 7,
**dadurch gekennzeichnet,**
**dass** die Betätigungseinrichtung (27) eine, insbesondere mechanische, Fernsteuerung ausgehend von einem vom Reinigungsorgan (13) entfernt gelegenen Benutzer-Haltebereich der Halteeinrichtung (15) umfasst, und/oder dass die Betätigungseinrichtung (27) zumindest teilweise in die Halteeinrichtung (15) integriert oder von der Halteeinrichtung (15) gebildet ist, und/oder dass mittels der Betätigungseinrichtung (27) zumindest eine die Schaltkonfiguration ändernde Stellbewegung eines Stellorgans (29) bewirkbar ist.

9. Vorrichtung nach Anspruch 8,
**dadurch gekennzeichnet,**
**dass** mittels des Stellorgans (29) eine Ventilanordnung der Schalteinrichtung (19) beaufschlagbar ist, wobei insbesondere mittels einer Stellbewegung des Stellorgans (29) gleichzeitig mehrere Ventile (21) der Ventilanordnung verstellbar sind, wobei insbesondere die Stellbewegung des Stellorgans (29) eine Drehbewegung ist.

10. Vorrichtung nach Anspruch 9,
**dadurch gekennzeichnet,**
**dass** die Stellbewegung des Stellorgans (29) durch eine, insbesondere manuelle, Drehbewegung (B) der Betätigungseinrichtung (27) bewirkbar ist, insbesondere durch Verdrehen einer, insbesondere mehrteiligen und/oder teleskopartig ausgebildeten, Haltestange, oder dass die Stellbewegung des Stellorgans (29) durch eine, insbesondere manuelle, Zieh-, Schiebe- oder Drückbewegung (B) bewirkbar ist, wobei insbesondere die Stellbewegung zumindest teilweise wenigstens näherungsweise parallel zur Halteeinrichtung (15) verläuft.

11. Vorrichtung nach einem der Ansprüche 7 bis 10,
**dadurch gekennzeichnet,**
**dass** eine Betätigungsbewegung (B), insbesondere eine Drehbewegung oder Zieh-, Schiebe- oder Drückbewegung, der Betätigungseinrichtung (27) in eine andersartige und/oder anders orientierte Stellbewegung des Stellorgans (29) umsetzbar ist, und/oder dass die Betätigungseinrichtung (27) eine Impulssteuerung (31) für die Schalteinrichtung (19) umfasst, insbesondere für ein Stellorgan (29) der Schalteinrichtung, wobei insbesondere die Impulssteuerung (31) einen nach Art einer Ratsche oder Knarre wirksamen Betätigungsmechanismus umfasst, mit welchem eine, insbesondere lineare, Hin- und Herbewegung eines Betätigungsorgans (33) in eine Stellbewegung eines Stellorgans (29) umsetzbar ist, insbesondere in eine umlaufende Drehbewegung des Stellorgans (29).

12. Vorrichtung nach Anspruch 11,
**dadurch gekennzeichnet,**
**dass** für die Impulssteuerung (31) die Fluidzufuhr zeitlich veränderbar ist, insbesondere durch Unterbrechen und Freigeben der Fluidzufuhr, und/oder dass die Impulssteuerung (31) dazu ausgebildet ist, eine Stellbewegung eines Stellorgans (29) bei einem Fluiddruck zu bewirken, der geringer ist als der Betriebsfluiddruck, insbesondere bei unterbrochener Fluidzufuhr, und/oder dass die Impulssteuerung (31) ein bei freigegebener Fluidzufuhr durch das zugeführte Fluid gegen eine Rückstellkraft in einer ersten Stellung gehaltenes Betätigungsorgan (33), insbesondere einen Kolben, umfasst, das durch Unterbrechen der Fluidzufuhr durch die Rückstellkraft in eine zweite Stellung bewegbar ist, wobei die Bewegung von der ersten Stellung in die zweite Stellung in eine Stellbewegung eines Stellorgans (29) umsetzbar ist.

13. Vorrichtung nach einem der vorhergehenden Ansprüche,
**dadurch gekennzeichnet,**
**dass** ein Stellorgan (29) der Schalteinrichtung (19) eine Mehrzahl von Schaltbereichen umfasst, die jeweils bei Ausrichtung mit einem zu einer Antriebseinheit (23) des Fluidantriebs (17) führenden Fluidweg (25) diesen entweder freigeben oder verschließen, wobei insbesondere zumindest an einem der mit der Fluidzufuhr kommunizierenden Schaltbereiche ein bewegliches Schließelement (35) vorgesehen ist, insbesondere ein Kugelventilelement, das durch das Fluid in eine Schließstellung bewegbar ist und in dieser gehalten wird.

14. Vorrichtung nach einem der vorhergehenden Ansprüche,
**dadurch gekennzeichnet,**
**dass** die Halteeinrichtung (15) zumindest eine mehrteilige und/oder teleskopartig ausgebildete Haltestange oder wenigstens ein flexibles und/oder biegsames, bevorzugt als Fluidleitung ausgebildetes, Halteorgan umfasst, und/oder dass der Fluidantrieb (17) als Turbinen- oder Schaufelradantrieb ausgebildet ist, und/oder dass der Fluidantrieb (17) wenigstens ein durch Beaufschlagen mittels eines zugeführten Fluids in Rotation versetzbares Turbinen- oder Schaufelrad (37) umfasst, dessen Rotation direkt oder indirekt, insbesondere über ein Getriebe, in eine Bewegung, insbesondere eine Rotation, des Reinigungsorgans (13) umsetzbar ist, und/oder dass eine Rotationsachse des Turbinen- oder Schaufelrades (37) parallel versetzt zu einer Rotationsachse des Reinigungsorgans (13) verläuft oder mit dieser zusammenfällt.

15. Vorrichtung nach einem der vorhergehenden Ansprüche,
**dadurch gekennzeichnet,**
**dass** eine Antriebseinheit (23) des Fluidantriebs (17), insbesondere mittig, zwischen zumindest zwei gemeinsam mittels der Antriebseinheit (23) bewegbaren Reinigungsorganen (13) angeordnet ist, wobei insbesondere Rotationsachsen der Reinigungsorgane (13) zusammenfallen oder parallel versetzt zueinander verlaufen, und/oder dass zumindest eine Antriebseinheit (23) des Fluidantriebs (17) stirnseitig an einem, insbesondere als Bürstenwalze ausgebildeten, Reinigungsorgan (13) angeordnet ist und insbesondere das Reinigungsorgan (13) stirnseitig hält, und/oder dass einem Reinigungsorgan (13) mehrere, insbesondere genau zwei, Antriebseinheiten (23) des Fluidantriebs (17) zugeordnet sind, und/oder dass das Reinigungsorgan (13) entweder für jeden von mehreren unterschiedlichen Betriebszuständen von wenigstens zwei Antriebseinheiten (23) gemeinsam oder in unterschiedlichen Betriebszuständen von unterschiedlichen Antriebseinheiten (23) angetrieben wird, und/oder dass die Antriebseinheiten (23) an unterschiedlichen Stellen des Reinigungsorgans (13) wirksam sind, wobei insbesondere das Reinigungsorgan (13) eine Bürstenwalze umfasst und an jeder Stirnseite der Bürstenwalze wenigstens eine, insbesondere die Bürstenwalze stirnseitig haltende, Antriebseinheit (23) angeordnet ist.
